# EUROPEAN PATENT APPLICATION

(11) **EP 2 667 028 A1**
(43) Date of publication of application: **27.11.2013**
(21) Application number: 12169424.4
(22) Date of filing: 25.05.2012
(51) Int. Cl.: F03G 6/06

(54) **A steam Rankine cycle solar plant and method for operating such plants**

(71) Applicant: Alstom Technology Ltd, 5400 Baden (CH)
(72) Inventor: Herzog, Maurus, 5107 Schinznach Dorf (CH); Ray, Suman, 5430 Wettingen (CH)

(57) **Abstract**

The invention relates to a steam Rankine cycle solar plant (10) and a method of operating thereof. The plant (10) comprises a high-pressure steam turbine (20) with an inlet (22), an intermediate stage (24) that is downstream of a first stage, and an outlet (26). A lower-pressure steam turbine (30) with an inlet (32) is fluidly connected to the outlet (26) of the high-pressure steam turbine (20). The plant (10) further comprises a focal point solar concentrator (40) that is configured and located to superheat steam, by either direct or indirect means, as it is fed to the high-pressure steam turbine (20), and a first linear solar concentrator (42) that is configured and located to reheat steam from the high-pressure steam turbine (20) as it is fed to the lower-pressure steam turbine (30).

## Description

### TECHNICAL FIELD

The present disclosure relates generally to concentrated thermal solar plants with steam Rankine cycles and more specifically to the design and configuration of such plants.

### BACKGROUND INFORMATION

Concentrated thermal solar plants that may be used to commercially generate electricity can be categories as either being based on linear solar concentrating collectors or focal point concentrating systems.

Linear solar concentration devices focus the Sun's rays in two dimensions onto a receiver placed along a linear focal point. The system tracks the Sun's movement about a single axis so as to maintain the alignment between the incident rays and the linear axis of the collector. Common linear concentration devices include parabolic trough collectors and Fresnel mirror arrays. The outlet temperature of such concentrators is typically limited to between 300°C and 550°C, mainly by the thermal stability of the heat transfer fluid. An advantage of such linear concentrators is their relatively lower installation and production costs, due in part to their relatively simple tracking requirements. This makes this technology suitable for lower temperature applications.

Focal point systems typically comprise a central receiver surrounded by a circular array of heliostats that concentrate sunlight on to the central receive in three dimensions. A heat-transfer medium passing through the receiver absorbs the highly concentrated radiation reflected by the heliostats and converts it into thermal energy to be used for generation of superheated steam for use in a steam Rankine cycle. In order to maintain focus on the tower requires a two-axis tracking system. The additional axial tracking dimension of these systems adds complexity and thus cost to the installation. While solar tower designs may achieve temperatures in the range of 600°C to 1100°C, due to the difficulty in approaching theoretical concentration ratio's, temperatures at the lower end of this range are typically achieved by commercial sized units. Nonetheless, point focussing systems are still advantageously used when high temperatures are required.

One disadvantage of point focussing concentrators is that increasing capacity requires increasing the number of heliostats thus increasing the size of the solar field. In order to provide a focal point for distal heliostats the tower height must be correspondingly increased as field size increases. This presents constructional challenges, in particular when the heat-transfer medium is water/steam in which case the boiler must be located at the top of the tower.

The vast majority of contemporary utility-scale solar thermal power plants are based on steam Rankine cycle (steam-steam turbine) technology using conventional steam-cycle technology. Efficiency of these cycles is highly dependent on the average temperature across the steam turbine. Therefore, advantageously, a reheat cycle may be used to increase efficiency. This reheat, combined with multiple pressure stage steam turbines can reduce the risk that the working fluid will get considerably wetter during the expansion cycle and thus minimise the risk of water erosion of steam turbine blades. An example of a solar power plant that can be used with reheat steam turbines is discussed in US patent application number US2010/0282242 A1. The solution comprises installing multiple solar receives on a solar power tower such that different temperatures and duties can be achieved in each of the independently configured receivers. As discussed in this application a separate receiver is located on the tower for the reheat services resulting in a tower with multiple receivers. In particularly for large solar fields, such an arrangement adds complexity to the solar power tower and has the further disadvantageous that each additional receiver adds additional height to the tower.

In order to utilise the advantages for both linear concentrators and focal point systems US Patent No. US 8,087,245 B2 discusses the use of placing linear concentration systems in series with a point focusing systems. This system is further optimized by the use of thermal storage and fossil fuel support that can be used to balance out variable solar flux. While offering some advantages, the discussed system, nonetheless does not overcome the problem of reduced efficiency due to low average cycle temperature.

It is known to operate thermal energy storage system in parallel with solar collector field as a means to store excess solar energy to be stored for use when the solar flux becomes insufficient. There are several storage solutions including direct systems and indirect systems.

In an indirect cycle thermal solar energy is stored using the fluid of the indirect cycle, that is, the fluid used to collect the thermal solar energy. The fluid is stored in two tanks: one at high temperature and the other at low temperature. Fluid from the low-temperature tank flows through the solar collector or receiver, where solar energy heats it to a high temperature. It then flows to the high-temperature tank for storage. Fluid from the high-temperature tank then flows through a heat exchanger, where it generates steam for electricity production. The fluid then exits the heat exchanger at a low temperature and returns to the low-temperature tank.

An alternative method is to use a single-tank thermocline systems that stores thermal energy in a solid medium, such as silica sand. The systems works on the principle that at any time a portion of the medium is at high temperature and a portion is at low temperature wherein hot- and cold-temperature regions are separated by a temperature gradient. High-temperature heat-transfer fluid flows into the top of the tank and exits the bottom at low temperature. This process moves the temperature gradient downwards and adds thermal energy to the system for storage. Reversing the flow moves the thermal gradient upward and removes thermal energy from the system to generate steam and electricity. Buoyancy effects create thermal stratification of the fluid within the tank, which helps to stabilize and maintain the temperature gradient.

### SUMMARY

A steam Rankine cycle solar plant is disclosed that can provide improved steam turbine operating efficiency, while minimising the cost of installation and operation.

The disclosure attempts to address this problem by means of the subject matters of the independent claims. Advantageous embodiments are given in the dependent claims.

An aspect provides a steam Rankine cycle solar plant that has a high-pressure steam turbine with an inlet, an intermediate stage downstream of a first stage, and an outlet. In addition, the aspect also includes a lower-pressure steam turbine that has an inlet fluidly connected to the outlet of the high-pressure steam turbine. A focal point solar concentrator is configured and located to superheat steam by either direct or indirect means as it is fed to the high-pressure steam turbine while a first linear solar concentrator is configured and located to reheat steam from the high-pressure steam turbine as it is fed to the lower-pressure steam turbine. This solution utilises the fact that a focal point solar concentrator can produce high temperature steam and thus improve cycle efficiency while the cheaper to install linear solar concentrator technology can be most efficiently used for the less temperature critical reheat service. In addition, for the same plant capacity, this arrangement reduces the size and therefore expense of the focal point solar concentrator field and required tower height as a result of the reduced load requirement. In addition, especially with direct steam solar tower applications, the complication of sending steam back to the top of the tower for reheat is avoided.

A further aspect additionally comprises a second linear solar concentrator that is configured and located to superheat steam and direct into the intermediate stage of the high-pressure steam turbine so as to bypass the inlet of the high-pressure steam turbine. This aspect may further include a supplementary boiler in parallel to the second linear solar concentrator. As this aspect enables the feeding of the high-pressure steam turbine by two different concentrated solar technologies, the aspect can take advantage of how different transient conditions affect each technology by making it possible to varying the relative feed of each concentrator to the high-pressure steam turbine.

Another aspect further comprises a first thermal energy storage unit located fluidly between the first linear solar concentrator and the lower-pressure steam turbine. This storage provides a means to smooth out solar flux variations.

Another aspect further includes a second thermal energy storage unit located fluidly between the second linear solar concentrator and the intermediate stage of the high-pressure steam turbine. In this aspect, the plant maybe configured with or without the first thermal energy storage unit. Storage provides a means to smooth out solar flux variations.

Another aspect further provides a supplementary boiler located so as to heat steam between the focal point solar concentrator and the inlet of the high-pressure steam turbine. This boiler may be used for transients or high power demand when the solar concentrator does not operate at the optimum temperature

Another aspect further provides a third linear solar concentrator, upstream of the focal point solar concentrator, configured and arranged as a preheater for the focal point solar concentrator. In this arrangement, the third linear solar concentrators may be configured to perform the function of a boiler and thus alleviate the need to locate a boiler on top of the focal point solar concentrator. This significantly reduces the cost and complexity of the focal point solar concentrator.

Further aspects provide methods for operating a steam Rankine cycle solar plant. In one aspect, the method includes the steps of:
a) generating a first steam by means of a focal point solar concentrator at a first pressure;
b) feeding the first steam to an inlet of a high-pressure steam turbine;
c) using a first linear solar concentrator to reheat steam from the high-pressure steam turbine; and
d) feeding the reheated steam to an inlet of a lower-pressure steam turbine.

Another aspect of the method further comprises the steps of using a second linear solar concentrator to generate a second steam at a second pressure below the first pressure and feeding the second steam to an intermediate stage of the high-pressure steam turbine.

Yet another aspect of the method further comprises the steps of using a third linear solar concentrator as a boiler to generate a third steam and feeding the third steam to the focal point solar concentrator.

Yet another aspect of the method further comprises the steps of using a supplementary boiler to generate a fourth steam and feeding the fourth steam to the inlet of the high-pressure steam turbine and thus bypass the focal point solar concentrator. This arrangement enables continuous steam supply to the high-pressure steam turbine during periods when the focal point concentrator is not able to operate at the optimum temperature.

Another aspect provides a method for operating a steam Rankine cycle solar plant, comprising the steps of:
● providing a high-pressure steam turbine with an inlet and intermediate stage;
● isolation the inlet so as to prevent steam for entering the high-pressure steam turbine via the inlet;
● using a supplementary boiler to generate a second steam; and
● feeding the second steam to an intermediate stage of the high-pressure steam turbine.

It is a further object of the invention to overcome or at least ameliorate the disadvantages and shortcomings of the prior art or provide a useful alternative.

Other aspects and advantages of the present disclosure will become apparent from the following description, taken in connection with the accompanying drawings, which by way of example, illustrate exemplary embodiments of the present invention.

### BRIEF DESCRIPTION OF THE DRAWINGS

By way of example, an embodiment of the present disclosure is described more fully hereinafter with reference to the accompanying drawings, in which:
Figure 1 is a schematic of an exemplary embodiment showing a concentrated thermal solar plant with a reheat steam turbine.
Figure 2 is a schematic of another exemplary embodiment of the concentrated thermal solar plant of Fig. 1 showing a collection of additionally embodiments including a dual pressure high-pressure steam turbine arrangement, thermal storage and supplementary heater ;
Figure 3 is a schematic of another exemplary embodiment of the concentrated thermal solar plant of Fig. 1 showing a collection of additional cycle improvements, including a linear solar concentrator located before a focal point solar concentrator and a supplementary boiler located parallel to the linear solar concentrator and focal point solar concentrator; and
Figure 4 is a schematic of another exemplary embodiment of the concentrated thermal solar plant of Fig. 1 showing a collection of additional cycle improvements, including a supplementary boiler located parallel to the second linear solar concentrator.

### DETAILED DESCRIPTION

Exemplary embodiments of the present disclosure are now described with reference to the drawings, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiments disclosed herein.

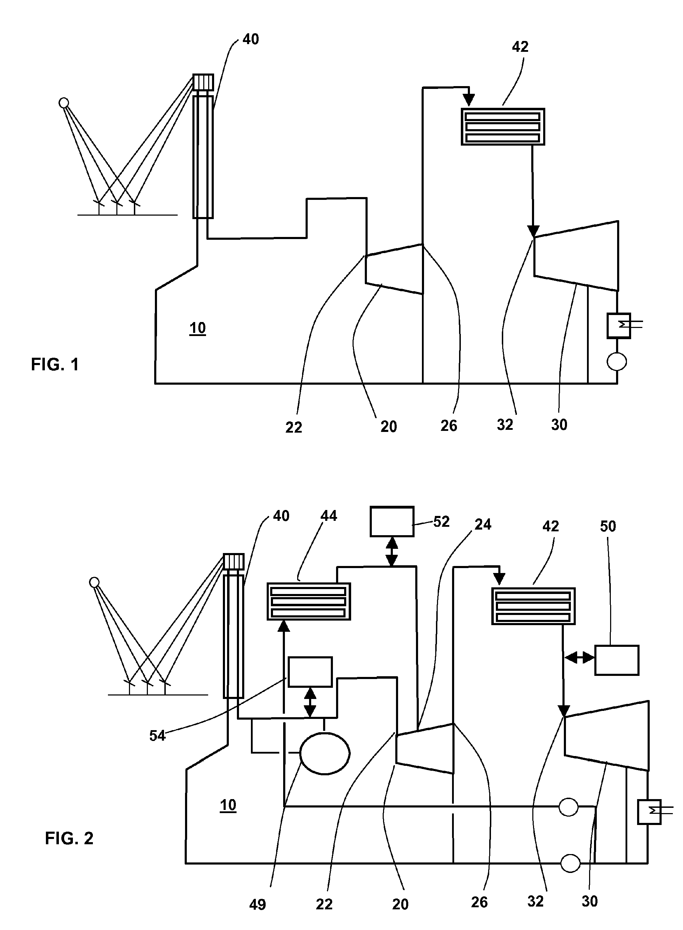

Fig.1 shows an exemplary embodiment of a steam Rankine cycle solar plant 10 that has a plurality of multistage steam turbines arranged in sequential series according to steam flow direction and reducing pressure. That is, the first steam turbine of the series is a high-pressure steam turbine 20 and the last steam turbine is a low pressure steam turbine. Immediately downstream of the high-pressure steam turbine is a lower-pressure steam turbine 30. In a not shown arrangement comprising three different pressure steam turbines, the lower-pressure steam turbine 30 is the second steam turbine of the series. This configuration does not preclude other arrangements having, for example, addition steam turbines arranged in parallel.

Each steam turbine has an inlet, where steam is fed, and an outlet, where steam is exhausted. Being configured as multi-stage steam turbines, also means that each steam turbine has an intermediate stage which is broadly defined as a stage downstream of the first stage.

The exhaust from the lowest pressure steam turbine of the series passes through a condenser before being pressured via a pump. The pump is the means that sets the pressure of the high pressure steam turbine 20.

In an exemplary embodiment shown in Fig. 1, water from the pump is fed to a focal point solar concentrator 40, for example a solar power tower, that acts as a steam boiler and superheater, thus providing direct superheating of the steam. In a not shown exemplary embodiment, the feed to the high pressure steam turbine 20 is boiled and superheated by a thermal fluid whose thermal energy source is a focal point solar concentrator 40 thus providing indirect superheating of the steam.

After the steam is expanded in the high-pressure steam turbine 20, in an exemplary embodiment shown in Fig. 1, steam exhaust from the high-pressure steam turbine 20 is reheated by a first linear solar concentrator 42 in a direct reheat system before being fed to a lower-pressure steam turbine 30. The purpose of the first linear solar concentrator 42 is to reheat and superheat exhaust steam from the high-pressure steam turbine 20 to improve cycle efficiency by increasing the average cycle temperature and reduce the water content of steam and thus reducing potential water droplet erosion in the lower-pressure steam turbine 30.

In another not shown exemplary embodiment, after the steam is expanded in the high-pressure steam turbine 20 it is reheated in an indirect cycle by a thermal fluid whose thermal energy source is a first linear solar concentrator 42 before being fed to a lower-pressure steam turbine 30.

In another exemplary embodiment shown in Fig. 2, condensate from the exhaust of the lowest pressure steam turbine is pumped up to a pressure lower than the pressure of the high-pressure steam turbine 20 and feed through a second linear solar concentrator 44 that is configured to be a boiler/superheater of the steam. This steam is feed into an intermediate stage 24 of the high-pressure steam turbine 20 at a pressure lower than the inlet 22 pressure of high-pressure steam turbine 20. In this way, a dual pressure loop is created around the high-pressure steam turbine 20 which enables the high-pressure steam turbine 20 to be loaded in varying amount by the focal point solar concentrator 40 and the second linear solar concentrator 44 respectively. In this way, it is possible to maximise energy production by judicial use of the different heat sources and thus take advantage of their relative operating efficiencies which are dependent on differing solar conditions. In addition, the thermal loading of the steam turbine can be optimised, which maybe particular advantages during transient conditions. In one exemplary embodiment, the second linear solar concentrator 44 provides heat energy directly to the steam feed to the intermediate stage 24 of the high-pressure steam turbine 20. In another exemplary embodiment, the second linear solar concentrator 44 provides heat energy to the steam fed to the intermediate stage 24 indirectly via a heat transfer medium.

Another exemplary embodiment shown in Fig. 2, has one more thermal energy storage units 50, 52, 54 of any known type suitable for storing thermal solar energy from solar energy concentrators for later use in a solar plant 10 during periods of low or no energy generation from the solar concentrators. In this way, the solar plant 10 can be at least partially decoupling from short term variations in solar flux. In an exemplary embodiment shown in Fig. 2, a first thermal energy storage unit 50 is configured and arranged to store thermal solar energy generated from the first linear solar concentrator 42. In another or further exemplary embodiment shown in Fig. 2, a second thermal energy storage unit 52 is configured and arrange to store thermal solar energy generated from the second linear solar concentrator 44. In a yet another or further exemplary embodiment shown in Fig. 2, a third thermal energy storage unit 54 is configured and arrange to store thermal solar energy generated from the focal point solar concentrator 40. Each of these exemplary embodiments maybe incorporated into either direct or indirect heating loops with the solar energy concentrators.

In an exemplary embodiment shown in Fig. 2, the solar plant 10 additional comprises a supplementary heater 49 between the focal point solar concentrator 40 and the inlet 22 of the high-pressure steam turbine 20 so as to heat steam fed to the inlet of the high-pressure steam turbine 20.

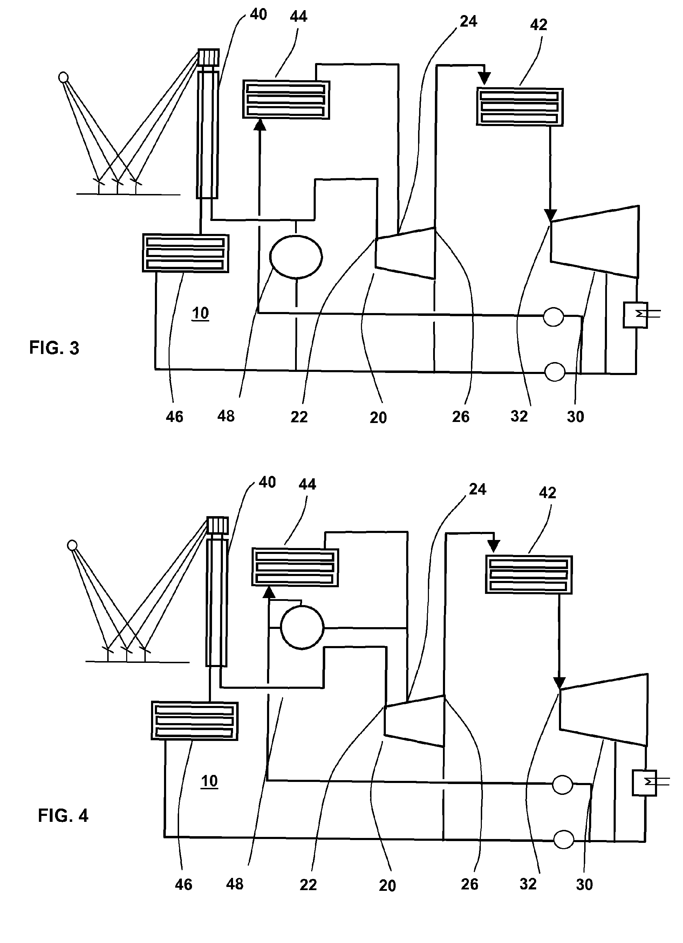

In another exemplary embodiment shown in Fig. 3, a third linear solar concentrator 46 is located upstream of the focal point solar concentrator 42. By this location, the third linear solar concentrator 46 performs the function of a preheater for the focal point solar concentrator 40. In an exemplary embodiment having this arrangement, the third linear solar concentrator 46 functions as a boiler while the focal point solar concentrator 40 functions as a superheater. In an exemplary embodiment shown in Fig. 3, the third linear solar concentrator 46 directly heats steam in the Rankine cycle. In another not shown exemplary embodiment, the third linear solar concentrator 46 heats steam in the Rankine cycle indirectly by means of an intermediate heat transfer fluid.

In an exemplary embodiment shown in Fig. 3, the solar plant 10 comprises a supplementary heater 49 located in parallel to the focal point solar concentrator 40. This arrangement enables the supplementary heater 49 to supplement the focal point solar concentrator 40 during periods of low solar flux or when the focal point solar concentrator 40 is out of operation.

In an exemplary embodiment shown in Fig. 4, the solar plant 10 comprises a supplementary boiler 48 located in parallel with the second linear solar concentrator 44. This arrangement enables the a supplementary boiler 48 to supplement the second linear solar concentrator 44 during periods of low solar flux or when the second linear solar concentrator 44 is out of operation.

In an exemplary embodiment shown in Fig. 4, the solar plant 10 comprises a supplementary boiler 48 located in series with the second linear solar concentrator 44. This arrangement enables the a supplementary boiler 48 to supplement the second linear solar concentrator 44 during periods of low solar flux or when the second linear solar concentrator 44 is out of operation.

Another exemplary embodiment provides an operating method for a steam Rankine cycle solar plant 10. The method comprises generating a steam, either directly or indirectly, with the aid of a focal point solar concentrator 40. This steam is generated at a first pressure and is fed into the inlet 22 of a high-pressure steam turbine 20. A first linear solar concentrator 42 is then used to reheat steam from the outlet 26 of the high-pressure steam turbine before the steam is further feed and expanded through a lower-pressure steam turbine 30. The heating of this exemplary embodiment may be either by direct means or indirect means using a heat transfer medium.

Another exemplary method includes the further step of generating a second steam, using a second linear solar concentrator 44, at a second pressure below that of the first pressure. This second steam is fed into an intermediate stage 24 of the high-pressure steam turbine. That is, into a stage located downstream of the first stage while bypassing the first stage.

Another exemplary method further includes using a third linear solar concentrator 46 to generate a third steam. This third steam is feed to the focal point solar concentrator 40.

A yet further exemplary method includes using a supplementary boiler 48 to boil water to generate a fourth steam. This fourth steam is fed to the inlet 22 of the high-pressure steam turbine 20 as shown in Fig. 3.

Another exemplary method provides a method for operating a steam Rankine cycle solar plant 10 on standby operation, for example during the night. The method, which is applied to a plant 10 having a high-pressure steam turbine 20 with an inlet 22 and intermediate stage 24. The method involves isolation the inlet so as to prevent steam for entering the high-pressure steam turbine via the inlet while using a supplementary boiler to generate a second steam that is then feed to an intermediate stage 24 of the high-pressure steam turbine. This method provides a means to of heat conservation strategy so as to enable faster start of the high-pressure steam turbine 20 when solar conditions enable generation of steam via solar means. It also makes it possible to us the solar plant in a non-solar mode to generate power production during periods of little or no isolation.

Although the disclosure has been herein shown and described in what is conceived to be the most practical exemplary embodiment, it will be appreciated by those skilled in the art that the present disclosure can be embodied in other specific forms. For example, the supplementary boiler and heater maybe any type of boiler including but not limited to one fuelled by fossil fuel, waste incineration or biomasss. The presently disclosed embodiments are therefore considered in all respects to be illustrative and not restricted. The scope of the disclosure is indicated by the appended claims rather that the foregoing description and all changes that come within the meaning and range and equivalences thereof are intended to be embraced therein.

### REFERENCE NUMBERS

- 10: steam Rankine cycle solar plant
- 20: high-pressure steam turbine
- 22: inlet
- 24: intermediate stage
- 26: outlet
- 30: lower-pressure steam turbine
- 32: inlet
- 40: focal point solar concentrator
- 42: first linear solar concentrator
- 44: second linear solar concentrator
- 46: third linear solar concentrator
- 48: supplementary boiler
- 49: supplementary heater
- 50: first thermal energy storage unit
- 52: second thermal energy storage unit
- 54: third thermal energy storage unit

## Claims

1. A steam Rankine cycle solar plant (10) comprising:
a high-pressure steam turbine (20) with:
an inlet (22);
an intermediate stage (24), downstream of a first stage; and
an outlet (26),
a lower-pressure steam turbine (30) with an inlet (32) fluidly connected to the outlet (26) of the high-pressure steam turbine (20);
**characterised by** the plant (10) comprising:
a focal point solar concentrator (40), configured and located to superheat steam by either direct or indirect means, as it is fed to the high-pressure steam turbine (20); and
a first linear solar concentrator (42) configured and located to reheat steam from the high-pressure steam turbine (20) as it is fed to the lower-pressure steam turbine (30).

2. The plant (10) of claim 1 further comprising a second linear solar concentrator (44) configured and located to superheat steam and direct the superheated steam into the intermediate stage (24) of the high-pressure steam turbine (20) so as to bypass the inlet (22) of the high-pressure steam turbine (20).

3. The plant (10) of claim 2 further comprising a supplementary boiler (48) either in parallel or in series to the second linear solar concentrator (44).

4. The plant (10) of claim 1 or 3 further comprising a first thermal energy storage unit (50) located fluidly between the first linear solar concentrator (42) and the lower-pressure steam turbine (30).

5. The plant (10) of any one of claims 2 to 4 further comprising a second thermal energy storage unit (52) located fluidly between the second linear solar concentrator (44) and the intermediate stage (24) of the high-pressure steam turbine (20).

6. The plant (10) of any one of claims 1 to 5 further comprising a supplementary heater (49) located so as to heat steam fluidly located between the focal point solar concentrator (40) and the inlet (22) of the high-pressure steam turbine (20).

7. The plant (10) of any one of claims 1 to 6 further comprising:
a third linear solar concentrator (46), upstream of the focal point solar concentrator (40), configured and arranged as a preheater of steam for the focal point solar concentrator (40).

8. A method for operating a steam Rankine cycle solar plant (10), comprising the steps of:
a) generating a first steam by means of a focal point solar concentrator (40) at a first pressure;
b) feeding the first steam to an inlet (22) of a high-pressure steam turbine (20);
c) using a first linear solar concentrator (42) to reheat steam from the high-pressure steam turbine (20); and
d) feeding the reheated steam to an inlet (32) of a lower-pressure steam turbine (30).

9. The method of claim 8 further comprising the steps of:
using a second linear solar concentrator (44) to generate a second steam at a second pressure below the first pressure; and
feeding the second steam to an intermediate stage (24) of the high-pressure steam turbine (20).

10. The method of claim 7 or 9 further comprising the steps of:
using a third linear solar concentrator (46) to generate a third steam; and
feeding the third steam to the focal point solar concentrator (40).

11. The method of any one of claims 8 to 10 comprising the steps of using a supplementary boiler (48) to boil water to generate a fourth steam and feeding the fourth steam to the inlet (22) of the high-pressure steam turbine (20).

12. A method for operating a steam Rankine cycle solar plant (10), comprising the steps of:
providing a high-pressure steam turbine (20) with an inlet (22) and intermediate stage (24);
isolation the inlet (22) so as to prevent steam for entering the high-pressure steam turbine (20) via the inlet (22);
using a supplementary boiler (48) to generate a second steam; and
feeding the second steam to an intermediate stage (24) of the high-pressure steam turbine (20).
